# EUROPEAN PATENT SPECIFICATION

(11) **EP 4 238 751 B1**
(45) Date of publication and mention of the grant of the patent: **18.12.2024**
(21) Application number: 22159824.6
(22) Date of filing: 02.03.2022
(51) Int. Cl.: B29D 99/00, B29C 70/56, B29C 70/52, B29C 70/86, B29C 31/00

(54) **MOLD ASSEMBLY FOR INFUSING A SPAR CAP AND RELATED METHODS**
FORMENANORDNUNG ZUM EINFÜLLEN EINER SPARRENKAPPE UND ZUGEHÖRIGE VERFAHREN
ENSEMBLE MOULE DE PERFUSION D'UN CAPUCHON DE LONGERON ET PROCÉDÉS ASSOCIÉS

(43) Date of publication of application: 06.09.2023
(73) Proprietor: LM Wind Power A/S, 6000 Kolding (DK)
(72) Inventor: RAZEGHI, Rama, Eastleigh, SO53 4SE (GB)
(74) Representative: Bardehle Pagenberg S.L.

(56) References cited:
- WO-A1-2016/015736
- WO-A1-2021/214726
- GB-A- 2 520 083

## Description

### FIELD

The present disclosure relates to mold assemblies for infusing a spar cap comprising a stack of pultruded plates, and methods for infusing the same.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven") or through the use of a gearbox. This way, the generator produces electricity which can be supplied to the electrical grid.

In order to extract more energy from the wind, the size of the rotor diameter is increased by increasing the dimensions of the wind turbine blades. The larger size of the blades introduces higher physical loads to the blade and related components. Wind turbine rotor blades generally comprise a body shell formed by two shell haves of a composite material. The body shell is relatively lightweight and has structural properties that are not designed to withstand the bending moments and other loads acting on the blade during operation. To improve the structural properties of the rotor blade such as stiffness and strength, the blade is generally reinforced with structural components, e.g. one or more spar caps at the suction and pressure side of the blade with a shear web connecting them.

The spar caps can be manufactured using several materials such as glass fiber laminate composites and carbon fiber laminate composites. Modern spar caps may be manufactured using pultruded composites, particularly carbon fiber based pultruded composites. Composites manufactured by pultrusion may have a constant cross-section that can be easily stacked to form a larger composite part. They may be referred to as pultruded "plates". A plurality of pultruded plates may be stacked and infused together in a mold to form a larger (i.e. longer, thicker, wider) composite part, e.g. a spar cap.

Due to the benefits of using pultruded plates for the manufacture of composite parts in terms of cost and others, the industry is developing new approaches to integrate them in composite manufacturing processes. Known approaches include the placement of pultruded plates in a mold to later infuse them. However, the pultruded plates may be difficult to align with respect to each other and to the mold, and this may lead to imperfections in the final product. To mitigate the aforementioned misalignments, a considerable amount of manual labor is required, which leads to an increase in the average cost of the composite part and a reduction in the overall composite manufacture throughput.

Further, approaches known in the art employ supports located in the mold to guide the pultruded plates coming from, for example, a lifting device, such as a crane or similar. After resin infusion and unmolding, the resin infused stack of pultruded plates may need to be treated by qualified operators to improve the quality of the product and e.g. remove excess resign. This results in a time-consuming and complex task that requires manual labor and hinders the production rate and quality of the final product.

WO 2016/015736 discloses a method for manufacturing a spar cap for a wind turbine blade, the spar cap comprising a stack of pultruded plates, the method comprising laying the stack of pultruded plates between a first and a second porous infill blocks on a mold; infusing the stack of pultruded plates with resin; and unmolding the infused stack of pultruded plates from the mold.

The present disclosure provides examples of assemblies and methods that at least partially overcome some of the drawbacks of existing molds for spar cap manufacturing and methods for manufacturing spar caps comprising pultrusion plates.

### SUMMARY

In a first aspect, a mold assembly is provided. The mold assembly is configured for manufacturing a spar cap comprising a stack of pultruded plates. The mold assembly comprises a mold surface having a longitudinal direction and a transverse direction, and at least two sidewalls. The sidewalls are arranged substantially in the longitudinal direction. Further, at least one of the sidewalls is configured to be adjusted along a transverse direction of the mold surface.

According to this first aspect, the mold assembly allows placement of the pultruded plates relative to the mold surface and to align the pultruded plates by adjusting the position of at least one sidewall along a transverse direction. Therefore, the mold assembly considerably reduces manual supervision and labor during the positioning and alignment of the pultruded plates. This results in a, at least, partially automatized process with high reproducibility. At the same time, it brings down production costs and increases the production rate of composite parts. Moreover, a draft angle which is usually employed for placement of the pultruded plates and for unmolding of the resin infused component may be reduced or eliminated. There will thus be less excess of resin on the side of the components, requiring less labor afterwards.

Further, the fact that at least one sidewall can be adjusted allows the use of the same mold assembly for pultruded plates of different dimensions. Further, said sidewall aids on the unmolding step after resin infusion, e.g. the sidewall may be move away from the spar cap to ease the collection of the same.

In another aspect, a method for manufacturing a spar cap comprising a stack of pultruded plates is provided. The method comprises laying the stack of pultruded plates between a first and a second sidewall on a mold surface. Further, the method comprises infusing the stack of pultruded plates with resin and unmolding the infused stack of pultruded plates from the mold. Additionally, at least one of the sidewalls is adjusted along the transverse direction relative to the stack of pultruded plates at least after the laying or prior the unmolding of the stack of pultruded plates.

According to this aspect, the method allows placing the stack of pultruded plates in a mold and then displacing a sidewall relative to the stack of pultruded plates. Thus, the alignment of the pultruded plates can occur during the translation of the sidewall. Further, the fact that a sidewall can be moved allows manufacturing spar cap with different dimensions, e.g. widths and can reduce the draft angle usually employed for unmolding. The sidewall(s) can be translated after infusing the stack of pultruded plates with resin, which simplifies considerably the unmolding process and reduces the risk of damaging the spar cap during extraction.

Throughout this disclosure, the terms "pultruded composites", "pultruded plates", "pultrusions" or similar terms are generally used to define reinforced materials (e.g. fibers or woven or braided strands) that are impregnated with a resin and pulled through a heated die such that resin cures.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2A is a schematic diagram illustrating a wind turbine blade according to one example;
Figure 2B schematically illustrates an internal structure of a wind turbine blade;
Figure 2C illustrates a molding system which may be used in the manufacture of a wind turbine blade;
Figure 3 schematically illustrates a mold assembly according to one example;
Figure 4 schematically illustrates a cross-section view of another example of a mold assembly in a first configuration;
Figure 5 schematically illustrates the mold assembly of figure 4 in a second configuration;
Figure 6 schematically illustrates two examples of stacks of resin infused pultruded plates;
Figure 7 is a flow diagram of a method for manufacturing a spar cap according to one example.

### DETAILED DESCRIPTION OF EXAMPLES

Reference now will be made in detail to embodiments of the present disclosure, one or more examples of which are illustrated in the drawings. Each example is provided by way of explanation only, not as a limitation.

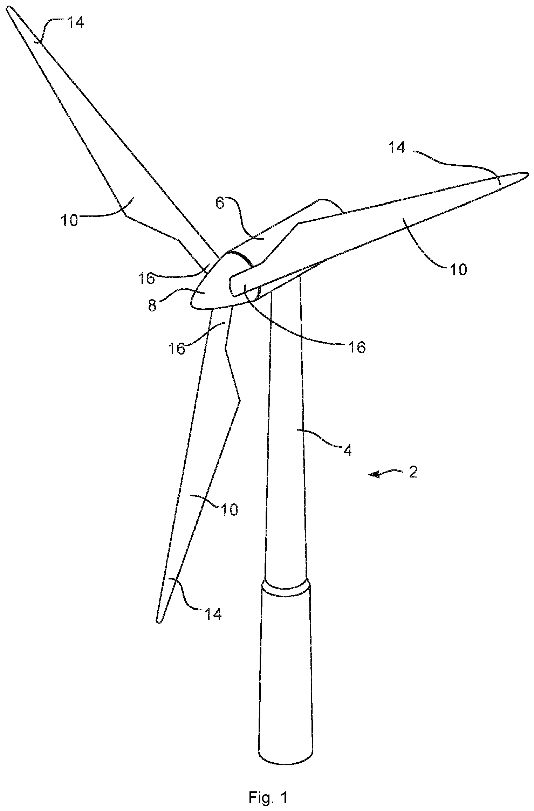

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

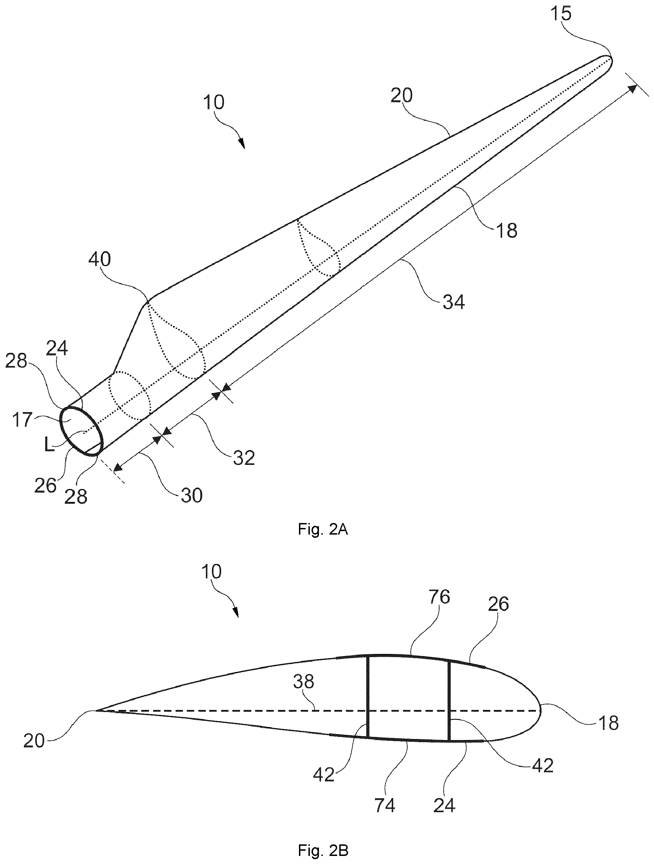

Fig. 2A shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

Fig. 2B is a schematic diagram illustrating a cross sectional view of an exemplary wind turbine blade 10, e.g. a cross sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

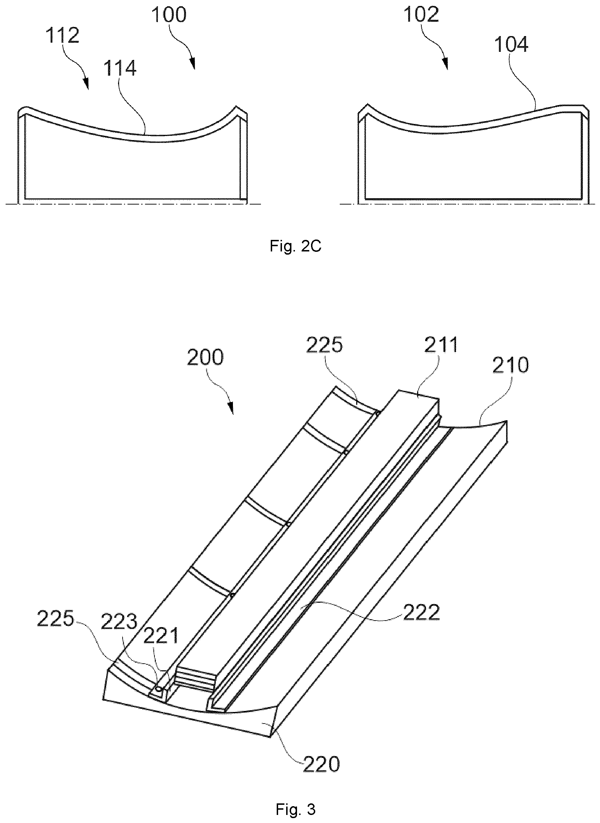

Fig. 2C is a schematic diagram illustrating an exemplary mold system for molding a blade shell of a wind turbine blade. The mold system 100 comprises a first mold 102 and a second mold 112. The first mold 102 is configured for manufacturing a first blade shell part of a wind turbine blade, such as an upwind shell part of the wind turbine blade (forming the pressure side). The second mold 112 is configured for manufacturing a second blade shell part of the wind turbine blade, such as a downwind shell part of the wind turbine blade (forming the suction side). The mold system 100 further comprises surfaces 104, 114 for depositing fibers.

Figure 3 schematically illustrates a top perspective view of a mold assembly 200 according to one example. The mold assembly 200 is configured to manufacture a spar cap comprising a stack of pultruded plates 211. The mold assembly 200 comprises a mold surface 210 having a longitudinal direction and a transverse direction. Further, the mold assembly 200 also comprises at least two sidewalls 221, 222 arranged substantially in the longitudinal direction. At least one of the sidewalls 221, 222 is configured to be adjusted along a transverse direction of the mold surface 210. This allows an accurate adjustment of the distance between sidewalls 211, 222 that serves both to guide the stack of pultruded plates 211 while these are laid on the mold surface 210, and to push the stack of pultruded plates 211 in the transverse direction and align them relative to each other and to the mold surface 210.

In the illustrated example, only one of the sidewalls 221 can be adjusted, but in other examples both sidewalls 221, 222 could be adjustable. Note that in the present example the stack of pultruded plates 211 has been illustrated elevated with respect to the mold surface 210, as if the stack of pultruded plates 211 was still descending down to the mold 200. Once the pultruded plates 211 have been positioned in the mold, the (final) adjustment of the sidewalls of the mold may occur.

Also referring to figure 3, in some examples the mold assembly 200 may comprise guides 225 extending in the transverse direction. The guides 225 may be configured to guide at least one of the sidewalls 221. The connection between the guides 225 and the sidewalls 221, 222, may be a male-female connection. The guides 225 may define the female connection and the sidewall 221 the male connection or *vice versa.* Further, the guides 225 may be embedded in the mold surface 210. Additionally, the guides 225 may comprise a sealing cap to at least partially seal the guide opening that is below the stack of pultruded plates 211 and avoid the accumulation of resin.

In examples, the sidewalls of the mold may be substantially parallel to each other i.e. the draft angle may be 0º. After resin infusion, the adjustable sidewall(s) may be displaced in the transverse direction to allow unmolding.

In examples, at least one of the sidewalls 211 may comprise a sliding element configured to slide along the guide 225 in the transverse direction. The sliding element and guide 225 may define a low friction coupling to promote a smooth adjustment. Besides, said sidewalls 211 may also comprise a clamping or fixing element to secure the position of the sidewall 211 along the guide, as for example a locking lever. The clamping (or fixing) element may be manual or automatic.

In further examples, the mold assembly 200 may further comprise a drive unit configured to adjust at least one of the sidewalls 221 along the transverse direction. The drive unit may be operated autonomously or by a qualified operator. The drive unit may comprise pneumatic, and/or hydraulic, and/or electronic components, such as for example, pistons, pumps, encoders, stepper motors, and others. Thus, the drive unit may displace the sidewalls 221, 222 prior to laying the stack of pultruded plates to provide more room for the descent of the same. In other examples, the drive unit may displace the sidewalls 221, 222 after laying the stack of pultruded plates to secure them and align them relative to each other and to the mold 220. Additionally, the mold assembly 200 may comprise a sensor unit configured to determine the pressure exerted by at least one of the sidewalls 221, 222 to the stack of pultruded plates 211. The sensor unit may feed the driver so that it stops the displacement after reaching a giving pressure threshold. Additionally, the sensor unit may also comprise a processing and control unit that process the data from the sensor and provides controlling parameters to the driver.

In alternative examples, adjusting the sidewall(s) may be a manual process.

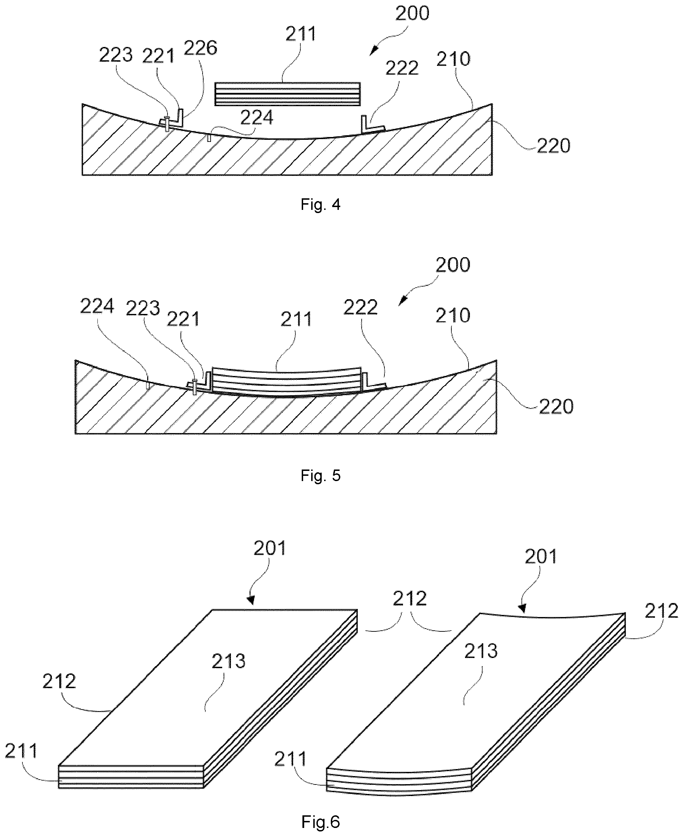

Figures 4 and 5 illustrate a cross-section view of the mold assembly according to another example of the present disclosure.

Figure 4 schematically illustrates a mold assembly 200 with a stack of pultruded plates 221 at a given height prior to being deposited onto the mold surface 210. Additionally, figure 4 illustrates that at least one of the sidewalls 221, 222, comprises a sidewall surface 226 configured to contact a lateral surface (reference 212 in figure 6) of the stack of pultruded plates 211. In examples, the sidewall surface 226 may be rotatable about the longitudinal direction of the mold surface 210. Thus, the rotation of the sidewall surface 226 allows defining a variable draft angle delimits the distribution of resin during infusion.

Additionally, figure 4 also shows that the mold surface 210 may comprise one or more receptacles 224 to receive sidewall fasteners 223. Having a plurality of receptacles distributed along the transverse direction allows locating the sidewall 221 at discrete locations depending on, for example, the dimensions of the pultruded plates or the stage of the molding process. It will be clear that a plurality of receptacles and fasteners may be provided along the longitudinal direction as well.

The receptacles 224 and corresponding fasteners 223 may provide a threaded connection, but other couplings can also be employed. In some examples, the sidewalls 221, 222 may have elongated holes to receive the sidewall fasteners 223. The elongated holes may provide a variable positioning of the sidewall 211 with respect to the mold surface 210. In other examples, the receptacles in the mold 220 may be elongated and the fasteners 223 may be introduced in them at a desired transverse position.

Figure 5 schematically shows the mold assembly 200 with a stack of pultruded plates 221 already deposited on top of the mold surface 210. Further, in figure 5, one of the sidewalls 221 is located next to the stack of pultruded plates 221 and fixed to the mold 220. In this example, the mold assembly 200 also comprises fasteners 223 that match the inner geometry of the receptacles 224 in the mold 220. As discussed with respect to figure 4, the sidewalls 221, 222 may comprise a lateral surface 226 that is rotatable about the longitudinal direction of the mold 220. As shown, this may lead to a lateral surface 226 that is substantially parallel to the lateral surface of the stack of pultruded plates 211.

Note that although the sidewalls 221, 222 have been represented as L profiles, these may have any other suitable cross-section.

Figure 6 illustrates two infused pultrusion stacks 201. The infused pultrusion stacks 201 define a longitudinal direction and a transverse direction. Further, the infused pultrusion stacks 201 and define two lateral surfaces 212 that limit the infused pultrusion stacks 201 in the transverse direction. The two lateral surfaces 212 extend along the longitudinal direction and are substantially parallel to each other.

In examples, the infused stack 201 comprises a plurality of pultruded plates 211 infused with resin. The stack of pultruded plates 211 may comprise carbon fiber, glass fiber, aramid fiber or other suitable fibers. Besides, the infused stack of pultruded plates 201 may comprise epoxy resin, polyester resin, vinylester resin or other suitable resins.

As illustrated in figure 6, the infused pultrusion stack 201 may have a rectangular cross section (embodiment on the left) or it may have a curved cross section (embodiment on the right). Thus, the external surface 213 of the infused pultrusion stack 201 may be either flat or curved. The dimensions and geometry of the infused pultrusion stack 201 may be adapted depending on the geometry or mechanical requirements of the composite product.

In both these examples, the draft angle of the sidewalls may have been 0° or close to 0º. Resin build-up on the sides of the stacks may thus be avoided. This can reduce the weight of the product and can also reduce the need for post-processing. Additionally, a draft angle of 0º or close to 0° may also reduce the cost of other components adjacent to the pultrusion stack 201. For example, core panels that are configured to be assembled next to the pultrusion stack 201 may be cut with straight angles that substantially match the sidewalls of the pultrusion stack 201. This may result in a faster and cheaper manufacturing process.

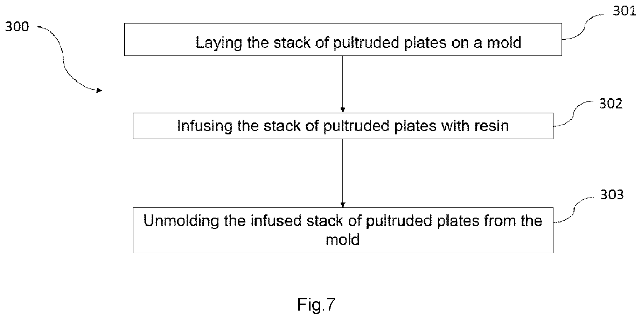

In some examples, the infused pultrusion stacks 201 may be obtained by a method that will be further discussed in relation with figure 7.

Figure 7 is a flow diagram of a method 300 for manufacturing a spar cap according to one example, wherein the spar cap of method 300 comprises a stack of pultruded plates 211. The method 300 comprises laying 301 the stack of pultruded plates 211 between a first and a second sidewall 221, 222 in a mold 220. Further, the method 300, at block 302, comprises infusing the stack of pultruded plates 211 with resin. Then, the method 300 also comprises unmolding 303 the infused stack of pultruded plates 201 from the mold 220.

During method 300 at least one of the sidewalls 221, 222 may adjusted along the transverse direction relative to the stack of pultruded plates 211. This may take place at least after the laying 301 of the pultruded plates 211 or prior the unmolding 303 of the stack of pultruded plates 211.

The adjustment of at least one of the sidewalls 221, 222 may be done according to any of the examples herein previously illustrated.

As previously discussed, the fact that at least one of the sidewalls 221, 222 is adjusted along the transverse direction greatly simplifies the placement of the stack of pultruded plates 211 (both by potentially guiding the descent and by providing more room for the plates) and the unmolding. In fact, in some examples adjusting at least one of the sidewalls 221, 222 is performed by displacing said sidewall 221, 222 in the transverse direction and subsequently fastening said sidewall 221, 222 to a receptacle in the mold 220 prior to infusing 302 the stack of pultruded plates 211 with resin.

In some examples, the method 300 comprises laying 301 the stack of pultruded plates 211 substantially adjacent to the first sidewall 222, the first sidewall 222 being fixed in the mold 220, and the method 300 further comprises adjusting the second sidewall 221 in the transverse direction to contact the stack of pultruded plates 211. This results in an improved alignment of the pultruded plates 211 and therefore increases the quality of the final product. Additionally, the sidewalls 221, 222 may define a draft angle smaller than 1 degree, specifically smaller than 0,5 degrees, more specifically a draft angle of approximately 0 degrees. This draft angle limits the accumulation of resin between the sidewall 221, 222 and the lateral surfaces of the pultruded plates 211, which reduces considerably the amount of post-molding surface treatment that may be required. In other examples, the sidewalls 221, 222 may be fixed in the mold at a given location and defining a large draft angle to ease the guiding of the stack of pultruded plates 211. Then, prior to infusing 302, the draft angle may be reduced by rotating a sidewall surface 226.

In examples, the sidewalls 221, 222 may be substantially parallel to each other. Since the mold 220 may have a curved geometry and the sidewalls 221, 222 may be displaced along the surface of the mold 210, the sidewalls 221, 222 may be further adjusted by rotating a sidewall surface 226 configured to contact the stack of pultruded plates 211. The rotation of the sidewall surface 226 may be about the longitudinal direction of the mold surface 210.

As discussed with respect to figure 6, the stack of pultruded plates 211 may comprise carbon fiber, glass fiber, aramid fiber or other suitable fibers and the resin may comprise epoxy resin, polyester resin, vinylester resin or other suitable resins.

In yet a further aspect of the present disclosure, a wind turbine blade is provided. The wind turbine blade comprises a shear web and spar caps, wherein the spar caps comprise an infused stack of pultruded plates 201 according to any of the examples illustrated herein, and/or manufactured according to any of the examples illustrated herein. The upwind and downwind shell of the wind turbine blade may be made e.g. in accordance with the process illustrated in figure 2.

Note that some of the technical features described in relation with the mold assembly 200 and infused pultrusion stack 201 can be included in the method 300 for manufacturing a spar cap, and vice versa.

Even though in all the depicted examples, the pultruded plates 211 are shown as thin, wide and long plates, which are stacked on top of each other, it is noted that this is done for illustration purposes only. I.e. in any of the depicted examples, a single pultruded plate 211 may in reality comprise a plurality of plates (or "strips") next to each other.

## Claims

1. A method (300) for manufacturing a spar cap for a wind turbine blade, the spar cap comprising a stack of pultruded plates (211), the method comprising:
laying (301) the stack of pultruded plates (211) between a first and a second sidewall (222, 221) on a mold (220);
infusing (302) the stack of pultruded plates (211) with resin; and
unmolding (303) the infused stack of pultruded plates from the mold (220),
**characterized in that** at least one of the sidewalls (221, 222) is adjusted along the transverse direction relative to the stack of pultruded plates (211) at least after the laying (301) or prior to unmolding (303) of the stack of pultruded plates (211).

2. The method (300) according to claim 1, wherein laying (301) the stack of pultruded plates comprises laying the stack of pultruded plates substantially adjacent to the first sidewall (222), the first sidewall (222) being fixed in the mold (220), and the method further comprises subsequently adjusting the second sidewall (221) in the transverse direction to contact the stack of pultruded plates (211).

3. The method (300) according to claim 1 or 2, wherein the sidewalls (222, 221) define a draft angle smaller than 1 degree, specifically smaller than 0,5 degrees, more specifically a draft angle of approximately 0 degrees.

4. The method (300) according to any of claims 1 - 3, wherein the sidewalls (222, 221) are substantially parallel to each other.

5. The method (300) according to any of claims 1 - 4, wherein the sidewalls (222, 221) are further adjusted by rotating a sidewall surface (226), said sidewall surface (226) being configured to contact the stack of pultruded plates (211).

6. The method (300) according to any of claims 1 - 5, wherein at least one of the sidewalls (222, 221) is adjusted by sliding said sidewall (222, 221) along a guide (225) in the mold (220).

7. The method (300) according to claim 1, wherein at least one of the sidewalls is attached through a fastener arranged in a hole of the sidewall and a receptacle in the mold.

8. The method according to claim 7, wherein at least one of the holes in the sidewalls (222, 221) is an elongated hole or at least one of the receptacles is an elongate receptacle.

9. A mold assembly (200) for manufacturing a spar cap comprising a stack of pultruded plates (211), the mold assembly (200) comprising:
a mold surface (210) having a longitudinal direction and a transverse direction, and
at least two sidewalls (222, 221) arranged substantially in the longitudinal direction, **characterized in that** at least one of the sidewalls (222, 221) is configured to be adjusted along a transverse direction of the mold surface (210).

10. The mold assembly (200) according to claim 9, wherein the two sidewalls are substantially parallel to each other.

11. The mold assembly (200) according to claim 9 or 10, wherein the mold surface (210) comprises receptacles (224) configured to receive sidewall fasteners (223) and at least one of the sidewalls (222, 221) comprises one or more elongated holes.

12. The mold assembly (200) according to any of claims 9 - 11, wherein the mold surface (210) comprises guides (225) extending in the transverse direction configured to guide at least one of the sidewalls (222, 221).

13. The mold assembly (200) according to any of claims 9 - 12, the mold assembly (200) further comprising a drive unit configured to adjust at least one of the sidewalls (222, 221) along the transverse direction.

14. The mold assembly (200) according to any of claims 9 - 13, wherein the mold assembly (200) further comprises a sensor unit configured to measure the pressure exerted by at least one of the sidewalls (222, 221) to the stack of pultruded plates (211).

15. An infused pultrusion stack (201) obtained by a method according to any of claims 1 - 7, and defining a longitudinal direction and a transverse direction, the infused pultrusion stack (201) comprising carbon fiber defining two lateral surfaces (212) that limit the infused pultrusion stack (201) in the transverse direction, wherein the two lateral surfaces (212) extend along the longitudinal direction and substantially parallel to each other.

## Patentansprüche

1. Verfahren (300) zur Herstellung einer Gurte für ein Windturbinenblatt, wobei die Gurte einen Stapel pultrudierter Platten (211) umfasst, wobei das Verfahren umfasst:
Legen (301) des Stapels pultrudierter Platten (211) zwischen einer ersten und einer zweiten Seitenwand (222, 221) auf eine Form (220);
Infundieren (302) des Stapels von pultrudierten Platten (211) mit Harz; und
Entformen (303) des infundierten Stapels von pultrudierten Platten aus der Form (220), **dadurch gekennzeichnet, dass**
mindestens eine der Seitenwände (221, 222) entlang der Querrichtung relativ zu dem Stapel pultrudierter Platten (211) mindestens nach dem Legen (301) oder vor dem Entformen (303) des Stapels pultrudierter Platten (211) angepasst wird.

2. Verfahren (300) nach Anspruch 1, wobei das Legen (301) des Stapels von pultrudierten Platten das Legen des Stapels von pultrudierten Platten im Wesentlichen angrenzend an die erste Seitenwand (222) umfasst, wobei die erste Seitenwand (222) in der Form (220) befestigt ist, und das Verfahren umfasst ferner das anschließende Einstellen der zweiten Seitenwand (221) in Querrichtung, um den Stapel pultrudierter Platten (211) zu berühren.

3. Verfahren (300) nach Anspruch 1 oder 2, wobei die Seitenwände (222, 221) einen Entformungswinkel von weniger als 1 Grad, insbesondere weniger als 0,5 Grad, genauer gesagt einen Entformungswinkel von etwa 0 Grad, definieren.

4. Verfahren (300) gemäß einem der Ansprüche 1-3, wobei die Seitenwände (222, 221) im Wesentlichen parallel zueinander sind.

5. Verfahren (300) gemäß einem der Ansprüche 1 bis 4, wobei die Seitenwände (222, 221) ferner durch Drehen einer Seitenwandfläche (226) eingestellt werden, wobei die Seitenwandfläche (226) so konfiguriert ist, dass sie den Stapel pultrudierter Platten (211) berührt.

6. Verfahren (300) gemäß einem der Ansprüche 1 bis 5, wobei mindestens eine der Seitenwände (222, 221) durch Verschieben der Seitenwand (222, 221) entlang einer Führung (225) in der Form (220) angepasst wird.

7. Verfahren (300) nach Anspruch 1, wobei mindestens eine der Seitenwände durch ein Befestigungselement, das in einem Loch der Seitenwand angeordnet ist, und eine Aufnahme in der Form befestigt wird.

8. Verfahren nach Anspruch 7, wobei mindestens eines der Löcher in den Seitenwänden (222, 221) ein Langloch ist oder mindestens eine der Aufnahmen eine längliche Aufnahme ist.

9. Formanordnung (200) zur Herstellung einer Gurte der einen Stapel von pultrudierten Platten (211) umfasst, wobei der Formaufbau (200) Folgendes umfasst:
eine Formoberfläche (210) mit einer Längsrichtung und einer Querrichtung und
mindestens zwei Seitenwände (222, 221), die im Wesentlichen in Längsrichtung angeordnet sind, **dadurch gekennzeichnet, dass** mindestens eine der Seitenwände (222, 221) so konfiguriert ist, dass sie entlang einer Querrichtung der Formfläche (210) verstellt werden kann.

10. Formanordnung (200) nach Anspruch 9, wobei die beiden Seitenwände im Wesentlichen parallel zueinander sind.

11. Formanordnung (200) nach Anspruch 9 oder 10, wobei die Formoberfläche (210) Aufnahmen (224) umfasst, die so konfiguriert sind, dass sie Seitenwandbefestigungselemente (223) aufnehmen, und mindestens eine der Seitenwände (222, 221) ein oder mehrere Langlöcher umfasst.

12. Formanordnung (200) gemäß einem der Ansprüche 9 bis 11, wobei die Formoberfläche (210) Führungen (225) umfasst, die sich in Querrichtung erstrecken und so konfiguriert sind, dass sie mindestens eine der Seitenwände (222, 221) führen.

13. Formanordnung (200) gemäß einem der Ansprüche 9 bis 12, wobei die Formanordnung (200) ferner eine Antriebseinheit umfasst, die so konfiguriert ist, dass sie mindestens eine der Seitenwände (222, 221) entlang der Querrichtung verstellt.

14. Formanordnung (200) gemäß einem der Ansprüche 9 bis 13, wobei die Formanordnung (200) ferner eine Sensoreinheit umfasst, die so konfiguriert ist, dass sie den Druck misst, der von mindestens einer der Seitenwände (222, 221) auf den Stapel pultrudierter Platten (211) ausgeübt wird.

15. Ein infundierter Pultrusionsstapel (201), der durch ein Verfahren gemäß einem der Ansprüche 1 bis 7 erhalten wird und eine Längsrichtung und eine Querrichtung definiert, wobei der infundierte Pultrusionsstapel (201), die zwei Seitenflächen (212) definieren, die den infundierten Pultrusionsstapel (201) in Querrichtung begrenzen, wobei sich die beiden Seitenflächen (212) entlang der Längsrichtung und im Wesentlichen parallel zueinander erstrecken.

## Revendications

1. Procédé (300) de fabrication d'un capuchon de longeron pour une pale d'éolienne, le capuchon de longeron comprenant une pile de plaques pultrudées (211), le procédé comprenant :
poser (301) de la pile de plaques pultrudées (211) entre une première et une seconde paroi latérale (222, 221) sur un moule (220) ;
infuser (302) la pile de plaques pultrudées (211) avec de la résine ; et
démouler (303) la pile de plaques pultrudées infusées à partir du moule (220), **caractérisé par le fait que**
au moins une des parois latérales (221, 222) est ajustée dans le sens transversal par rapport à la pile de plaques pultrudées (211) au moins après poser (301) ou avant démouler (303) la pile de plaques pultrudées (211).

2. Procédé (300) selon la revendication 1, dans lequel poser (301) la pile de plaques pultrudées comprend poser la pile de plaques pultrudées sensiblement adjacente à la première paroi latérale (222), la première paroi latérale (222) étant fixée dans le moule (220), et le procédé comprend en outre l'ajustement ultérieur de la deuxième paroi latérale (221) dans la direction transversale pour entrer en contact avec la pile de plaques pultrudées (211).

3. Procédé (300) selon la revendication 1 ou 2, dans lequel les parois latérales (222, 221) définissent un angle de dépouille inférieur à 1 degré, en particulier inférieur à 0,5 degré, plus précisément un angle de dépouille d'environ 0 degré.

4. Procédé (300) selon l'une des revendications 1 à 3, dans lequel les parois latérales (222, 221) sont sensiblement parallèles l'une à l'autre.

5. Procédé (300) selon l'une des revendications 1 à 4, dans lequel les parois latérales (222, 221) sont ajustées par la rotation d'une surface de paroi latérale (226), ladite surface de paroi latérale (226) étant configurée pour entrer en contact avec la pile de plaques pultrudées (211).

6. Procédé (300) selon l'une des revendications 1 à 5, dans lequel au moins une des parois latérales (222, 221) est ajustée en faisant glisser ladite paroi latérale (222, 221) le long d'un guide (225) dans le moule (220).

7. Procédé (300) selon la revendication 1, dans lequel au moins une des parois latérales est fixée par une attache disposée dans un trou de la paroi latérale et un réceptacle dans le moule.

8. Procédé selon la revendication 7, dans lequel au moins un des trous des parois latérales (222, 221) est un trou allongé ou au moins un des réceptacles est un réceptacle allongé.

9. Ensemble de moule (200) pour la fabrication d'un capuchon de longeron comprenant une pile de plaques pultrudées (211), l'assemblage de moule (200) comprenant :
une surface de moule (210) ayant une direction longitudinale et une direction transversale, et
au moins deux parois latérales (222, 221) disposées sensiblement dans la direction longitudinale, **caractérisées par le fait qu'**au moins une des parois latérales (222, 221) est configurée pour être ajustée le long d'une direction transversale de la surface du moule (210).

10. Ensemble de moule (200) selon la revendication 9, dans lequel les deux parois latérales sont sensiblement parallèles l'une à l'autre.

11. Ensemble de moule (200) selon la revendication 9 ou 10, dans lequel la surface du moule (210) comprend des réceptacles (224) configurés pour recevoir des attaches de paroi latérale (223) et au moins une des parois latérales (222, 221) comprend un ou plusieurs trous oblongs.

12. Ensemble de moule (200) selon l'une des revendications 9 à 11, dans lequel la surface du moule (210) comprend des guides (225) qui s'étendent dans la direction transversale configurés pour guider au moins l'une des parois latérales (222, 221).

13. Ensemble de moule (200) selon l'une des revendications 9 à 12, l'ensemble de moule (200) comprenant en outre une unité d'entraînement configurée pour ajuster au moins l'une des parois latérales (222, 221) le long de la direction transversale.

14. Ensemble de moule (200) selon l'une des revendications 9 à 13, dans lequel l'ensemble de moule (200) comprend en outre une unité de capteur configurée pour mesurer la pression exercée par au moins l'une des parois latérales (222, 221) sur la pile de plaques pultrudées (211).

15. Empilement de pultrusion infusé (201) obtenu par un procédé selon l'une des revendications 1 à 7, et définissant une direction longitudinale et une direction transversale, l'empilement de pultrusion infusé (201) comprenant de la fibre de carbone définissant deux surfaces latérales (212) qui limitent l'empilement de pultrusion infusé (201) dans la direction transversale, dans lequel les deux surfaces latérales (212) s'étendent le long de la direction longitudinale et sont substantiellement parallèles l'une à l'autre.
